# EUROPEAN PATENT APPLICATION

(11) **EP 4 371 960 A1**
(43) Date of publication of application: **22.05.2024**
(21) Application number: 22208520.1
(22) Date of filing: 21.11.2022
(51) Int. Cl.: C04B 28/00, C04B 14/46, C04B 14/42

(54) **POROUS GEOPOLYMER PRODUCT**

(71) Applicant: Saint-Gobain Ecophon AB, 260 61 Hyllinge (SE)
(72) Inventor: KARLSSON, Ola, 222 41 Lund (SE); HOOSHMAND, Saleh, 254 73 Ödåkra (SE); BORGSTRÖM, Johan, 224 67 Lund (SE)
(74) Representative: AWA Sweden AB

(57) **Abstract**

The present disclosure relates to a method for manufacturing of porous geopolymer product. The method comprises providing ground mineral fibre material (2) obtained from recycled mineral fibre objects, providing a mixture (4) comprising the ground mineral fibre material, activated carbon, activator, fibre component, and water, forming the mixture (6) into a desired shape, and curing the mixture (8), thereby obtaining the geopolymer product. The present disclosure further relates to a geopolymer product, and use of the geopolymer product.

## Description

### Field of the invention

The present inventon relates to a method for manufacturing of a porous geopolymer product. The present invention further relates to a geopolymer product, and use of a geopolymer product.

### Background art

Elements comprising mineral wool may be used for a variety of purposes. For instance, the elements comprising mineral wool may constitute acoustical panel elements and may be formed as horizontally arranged ceiling tiles, vertically arranged baffle elements, wall mounted elements or free standing screens. Alternatively, the elements may be formed as thermal insulation elements.

The mineral wool may be in the form of glass or stone wool.

The use of elements comprising mineral wool results in the generation of considerable amounts of waste.

The waste may be generated during manufacturing of the elements comprising mineral wool and may comprise rejected elements or removed sections during shaping of the elements.

Waste may also be generated during installation of a system of elements comprising mineral wool. The waste at this stage may comprise sections removed from elements during trimming or elements remaining after completed installation.

Finally, waste may be generated after end of life when the system of elements comprising mineral wool is demounted.

Conventionally, waste in the form of elements comprising mineral wool generated during manufacturing, installation or demounting after end of life has been difficult to recycle in an efficient manner.

When recycled material, such as recycled mineral wool, is used for manufacturing of new products, volatile components originally present in the recycled material or being formed during the recycling process may transfer to the new product and be released during use of the new product. This may be problematic as such volatile components are undesired, for example due to toxicity, or other health or environmental related issues.

EP3085676 discloses a method for production of geopolymer slabs using recycled glass.

Another type of well known panel element is the so-called wood-wool cement board. This type of panel element is made of Portland cement mixed with wood-wool, for instance spruce-wood wool. The wood-wool cement board has thermal insulating and sound absorbing properties, and also exhibit resistance to bio-degradation and fire. However, some wood extracts, such as sugar, may have a negative impact on the setting of the cement and thereby result in boards with poor mechanical porperties. Also, the wood-wool cement board has a high environmental impact since the cement component in the board is associated with a high CO₂ footprint.

### Summary of the invention

It is an object of the present invention to provide a method for manufacturing of a porous geopolymer product using recycled mineral fibre objects, which method lacks or solves at least one problem indicated above. It is also an object to provide a geopolymer product, and use of such geopolymer product for acoustic treatment of a room.

To achieve at least one of the above objects and also other objects that will be evident from the following description, a method for manufacturing of porous geopolymer product defined in claim 1, a geopolymer product having features defined in claim 14, and use of the geopolymer product according to claim 16 for acoustic treatment of a room are provided according to the present invention. Preferred embodiments will be evident from the dependent claims.

More specifically, according to a first aspect there is provided a method for manufacturing of porous geopolymer product, the method comprising: providing ground mineral fibre material obtained from recycled mineral fibre objects; providing a mixture comprising the ground mineral fibre material, activated carbon, activator, fibre component, and water; forming the mixture into a desired shape; and curing the mixture, thereby obtaining the geopolymer product.

The providing ground mineral fibre material obtained from recycled mineral fibre objects, thus, allows the use of recycled mineral fibre objects for manufacturing of porous geopolymer product.

Using of the fibre component allows the geopolymer product to be porous.

Provision of ground mineral fibre material, activated carbon, activator, fibre component, and water as a mixture, lends the porous geopolymer product desirable properties, while at the same time allowing the method to have an advantage of using a combination of recycled and carbon-neutral materials. Even reduction of volatile compounds present in the geopolymer product may be adsorbed.

The mixture may comprise 10-60% by weight of ground mineral fibre material.

With such content of ground mineral fibre, a large fraction of recycled material is incorporated in the geopolymer product. Further, in combination with other components present in the geopolymer board, desirable properties are realised including, for example, desirable mechanical and sound absorbing properties.

The mixture may comprise 25-40% by weight of ground mineral fibre material.

The mixture may comprise 0.1-10% by weight of activated carbon.

With such a content of activated carbon in combination with the other components present in the geopolymer board, it is made possible to incorporate biologically derived and carbon neutral materials in the geopolymer product, with surprisingly maintained or improved mechanical and sound absorbing properties as well as reduced. Further, reduced release of volatile organic compounds (VOCs) from the geopolymer product is realised with a content of activated carbon. Examples of VOCs include toluene, butanal, acetone, terpenes, xylene and formaldehyde. Yet further, reduced release of odors may be realised. In addition to such reduced release, an uptake of VOCs and odors from ambient air by the geopolymer product is allowed.

The mixture may comprise 1-50% by weight of activator.

The activator, mixed or contacted with the ground mineral fibre material, allows activation of the ground mineral fibre material under formation of an activated mineral fibre material. In the present method, such activated mineral fibre material allows the curing of the mixture into a hardened or cured geopolymer product. The use of recycled mineral fibre material and the activator, and other components present in the geopolymer board, may be associated with a reduced carbon foot-print of the geopolymer product. Use of Portland cement can be avoided.

The mixture may comprise 5-75% by weight of fibre component in dry form.

Presence of fibre component allows for a geopolymer product with desirable porosity to be manufactured. Further, the fibre component in combination with other components present in the geopolymer board, lend the material desirable mechanical and sound absorbing properties and a relatively low weight.

The amount of fibre component is calculated for fibre component in dry form. It shall be understood that the fibre component may be provided in either dry or wet form, the wet form having a content of water. The dry form essentially comprises no water.

The mixture may comprise 10-60% by weight of water.

Thereby, suitable amount of water for activation and curing is realised.

The mixture may comprise 0.1-10% of activated carbon, 10-50% of activator, 10-50% of fibre component, and 10-60% of water, by weight of the mixture.

The activated carbon may in form of a powder.

The activated carbon being provided in form of a powder provides a high surface-to-volume ratio of the activated carbon.

The activated carbon may be provided in form of larger aggregates or pellets with a size larger than the mesh in the fiber networks. Thereby, release of active carbon powder from the geopolymer product may be prevented. Further, the activated carbon can be efficiently distributed within the mixture and the geopolymer product. This may be conducted at one or morestages of the production process.

The alkaline activators may be selected from the group consisting of NaOH, Ca(OH)₂, KOH, Na_{2y}Si_{y}O_{2y+x}, K_{2y}Si_{y}O_{2y+x}, and mixtures of any of these compounds, wherein y and x each is an integer. For example, y may be 1 and x may be 1. According to an example, Na_{2y}Si_{y}O_{2y+x} may be Na₂SiO₃, and/or K_{2y}Si_{y}O_{2y+x} may be K₂SiO₃.

The fibre component may be in a fibre wool form.

Thereby, high porousity of the geopolymer product may be achieved.

The presence of the fibre component allows a relatively low density of the geopolymer product in the range of 20 - 400 kg/m³, which makes the geopolymer product useful for various applications, such as use as a board for a suspended ceiling system.

The presence of a fibre component and the porosity further results in a product having desirable sound absorbing properties.

The fibre component may be a wood fibre component, such as a wood-wool component, a polymer fibre component, such as a PET fibre component, and/or a mineral wool component. The fibre component may be a recycled fibre component.

Such fibre components can be selected to be carbon neutral and/or used in recycled form.

Combinations of two or more fibre components may be used. If two or more types of fibres are used, the fibre types may have substantial different fibre diameter or cross section thereby creating a double porosity structure in the panel element improving the sound absorbing property.

The providing the mixture may comprise: mixing the activated carbon and the ground mineral fibre material for obtaining a first composition; contacting the fibre component and the activator in aqueous solution for obtaining a second composition; and mixing the first and the second compositions for obtaining the mixture.

Such a method may herein be referred to as a semi-dry method, since it involves mixing of the first composition in dry form and the second composition in wet form.

The mixing the activated carbon and the ground mineral fibre material for obtaining a first composition, may further comprise mixing in one or both of metakaolin and fly ash.

The providing the mixture may comprise mixing the activated carbon, the activator and the ground mineral fibre material for obtaining a third composition; mixing the third composition with the fibre component and water, for obtaining the mixture.

Such a method may herein be referred to as a dry method, since it involves mixing of the third composition in dry form with the fibre component and water.

The activator may be dry activator, or activator in dry or water free form.

It shall be realised and appreciated that for the dry method the water of the mixing may be provided separated from the fibre component, or at least partially provided with the fibre component, such as by the water being at least partially adsorbed and/or absorbed by the fibre component. At least partially provided may be fully provided. For example, the fibre component may be wood wool with absorbed water. Water provided with the fibre material may not be sufficient for reaching the total required amount of water for the method, for which case additional water may be added, whereby the water is partially provided with the fibre component.

Also with the semi-dry method, water may be at least partially provided with the fibre component.

Using a fibre component with absorbed and/or adsorbed water may result in other components of the mixture efficiently sticking to and, thus, being contacted with the fibre material. This may, in turn, result in efficient spreading of other components within the mixture and, thereby, within the geopolymer product. For example, activated carbon in powder form may stick to wet fibre components, and may form a layer or coating on the fibre material.

The mixing may comprise mixing the activated carbon, the activator, the ground mineral fibre material, and one or both of metakaolin and fly ash, for obtaining the third composition.

According to a second aspect there is provided a geopolymer product comprising a layer comprising a fibre component, a geopolymer binder made from ground mineral fibre material obtained from recycled mineral fibre objects, and activated carbon, wherein the layer has a porosity of 0.75 to 0.99.

Such a porosity is achievable with the composition of the geopolymer product, and provides desirable mechanical and sound absorbing properties, combined with relatively low weight. Further, such a porosity allows for gaseous flow, such as air flow, through and within the geopolymer product. Thus, air ambient to the geopolymer product may pass through the geopolymer product.

The layer may comprise 60% to 90% of the geoplymer binder and 10% to 40% of the fibre component, by weight of the layer.

The geopolymer product may be an acoustical panel element, for example, an acoustical panel element useful in various systems, such as a suspended ceiling system.

According to a third aspect, there is provided a use of the geopolymer product according to the second aspect for acoustic treatment of a room.

According to a fourth aspect there is provided a geopolymer product obtained by the method according to the first aspect.

Benefits and details of one aspect may be relevant to one or more of the other aspects.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic block scheme illustrating a method for manufacturing of porous geopolymer product in accordance with an embodiment.
Fig. 2 is a schematic block scheme illustrating a method for manufacturing of porous geopolymer product in accordance with an embodiment referred to as a semi-dry method.
Fig. 3 is a schematic block scheme illustrating a method for manufacturing of porous geopolymer product in accordance with an embodiment referred to as a dry method.
Fig. 4 is a schematic perspective view of an acoustical geopolymer product in accordance with an embodiment.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The invention is based on a realisation that the method for manufacturing of porous geopolymer product comprising the steps and components as described herein results in geopolymer products with several beneficial properties relating to eg. mechanical and sound absorbing properties while at the same time providing reduction of any present volatile components contacted with the geopolymer product. The invention is further based on a realisation that elements comprising mineral wool may be recycled and used as a component in the method for manufacturing of geopolymer products, and for the geopolymer product as such.

The term geopolymer, or alkali activated material, refers to an inorganic material that form long-range, covalently bonded, non-crystaline networks.

Manufacturing of geopolymers is well known in the art. Geopolymers, sometimes referred to as Alkali Activated Materials (AAM), involves alkaline activation in a solution-mediated process, wherein reactions take place between activators in the alkaline activating solution and solid aluminosilicate precursors.

The present disclosure describes manufacturing of a porous geopolymer product, wherein ground mineral fibre material is mixed with an activator and water, which mixture may be cured under formation of a geopolymer material, as will be described in further detail below. The activator, mixed with the ground mineral fibre material, allows activation of the ground mineral fibre material under formation of an activated mineral fibre material. The use of recycled mineral fibre material and the activator, and other components present in the geopolymer board, may be associated with a reduced carbon foot-print of the geopolymer product. Use of Portland cement can be avoided.

Activated carbon, sometimes referred to as active carbon, as used herein, refers to a form of carbon frequently used eg. to filter contaminants from water and air. The activated carbon is rich in small, low-volume pores providing a large surface area of the activated carbon.

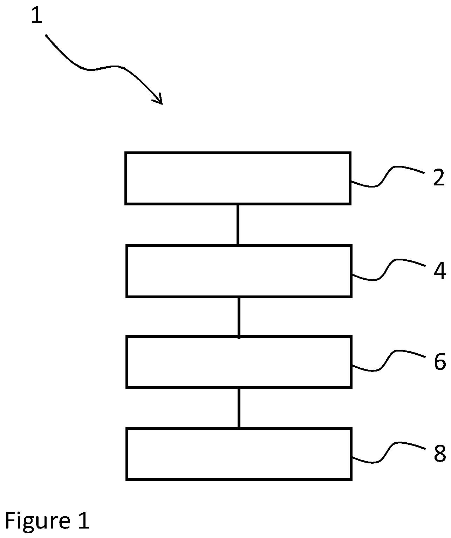

With reference to Fig. 1, a method 1 for manufacturing of porous geopolymer product will now be described. The method 1 comprises providing ground mineral fibre material 2 obtained from recycled mineral fibre objects; providing a mixture 4 comprising the ground mineral fibre material, activated carbon; activator, fibre component, and water; forming the mixture 6 into a desired shape; and curing the mixture 8, thereby obtaining the geopolymer product.

The ground mineral fibre material obtained from recycled mineral fibre objects may be obtained from grinding or other suitable type of micronisation, of recycled mineral fiber objects. The recycled objects normally constitute waste generated during manufacturing, installation or demounting after end of life of elements comprising mineral wool. The mineral wool may be glass wool or stone wool.

The recycled objects may comprise surface layers which may be removed prior to the grinding.

The grinding or milling of the recycled objects may be performed by a vibratory disc mill or a ball mill.

During the grindning of the mineral wool, the fiber length of the fibres forming the mineral wool is reduced. The powder component may after grinding have an average mineral wool fibre length of 20 - 150 µm, more preferably 30 - 60 µm and an averege mineral wool fiber width of 5 - 25 µm, more preferably 5 - 10 µm. The tapped density of the powder component may be in the range of 900 - 1 200 kg/m³.

Forming the mixture intop desired shape may be forming into shapes of boards. Such boards may be for use as acoustic panels.

The use of fibre component, such as for example wood wool, together with other components used with the method, allows for a porous geopolymer product to be formed. Typical densities of the geopolymer product may be in the range of 20 - 400 kg/m³.

The porosity of the geopolymer product may be in the range of 0,75 - 0,99. The porosity Ø, or the void fraction, of a material is a measurement of the empty space in a material and is calculated as the relationship between the volume of the void Vv, i.e. the empty space in the material, and the total volume of the material V_{T}: Ø = Vv / V_{T}. The porosity is thus a fraction between 0 and 1 and may also be represented in percent by multiplying the fraction by 100.

The activator may be selected from the group consisting of NaOH, Ca(OH)₂, KOH, Na_{2y}Si_{y}O_{2y+x}, K_{2y}Si_{y}O_{2y+x}, and combinations thereof, wherein y and x each is an integer, for example, y may be 1 and x may be 1.

For example, a mixture of KOH and NaOH may be used, or Na_{2y}Si_{y}O_{2y+x} or K_{2y}Si_{y}O_{2y+x} may be used.

In particular wherein the mixture comprises 0.1-10% of activated carbon, 10-50% of activator, 10-50% of fibre component, and 10-60% of water, by weight of the mixture, desirable porosity is achieved. This is believed to be a result of thereby obtained suitable weight ratios between the individual components of the mixture.

Further, desirable mechanical properties are achieved. The use of activator contacted with the ground mineral fibre material and water chemically activate the ground fibre material such that a geoplymer material may be formed. The activator may be selected to provide alkaline activation in a solution-mediated process, and the reactions taking place between the alkaline activating solution and the solid aluminosilicate precursors allows defining properties of the formed geopolymer product formed. For example, the mineral wool may be milled into fine particles, or a dust or powder, and then mixed with an alkali activator and the resulting material(s) may be used to replace Portland cement.

The activated carbon may be obtained using known methods, for example, wherein carbon is provided and activated by heating, such as to temperatures within a range of 500-1000°C, in an oxygen free or depleted environment. Following heat treatment, the activated carbon may be further treated such as via chemical modification.

The activated carbon for the process may have a specific surface area above 1000 m²/g, such as above 2000 m²/g, or above 3000 m²/g, for example within a range of 1000 m²/g to 5000 m²/g.

The activated carbon may be in form of a powder. The powder may to 90% by weight of the powder have an average particle size within the range of 1 micrometer to 5 mm, preferably 10 micrometers to 1 mm. Such particle sizes allow for efficient molecular absorption, without compromising with mechanical strength of the geopolymer product, and at least maintained acoustic properties. Further, high surface-to-volume ratio of the activated carbon is achieved. The molecular absorption is advantageous as it allows for absorption of undesirable volatile components, for example compounds originally present in the recycled material or being formed during the recycling process. This benefit with the geopolymer product is further realised and improved with the porosity achievable with the present method, which porosity allows flow of gasseous media through the geopolymer product.

The activated carbon may be obtained from renewable sources. For example, the activated carbon may be obtained from plants, seeds or wood.

It has been an unexpected finding that activated carbon could be used together with the other components present in the geopolymer product, in form of an acoustic panel, with at least maintained properties of the acoustic panel concerning strength and sound absorbing properties and with an effect of reducing presence of volatile contaminants, such as volatile organic carbons, which may originate from recycling of mineral fibre objects, or from other sources.

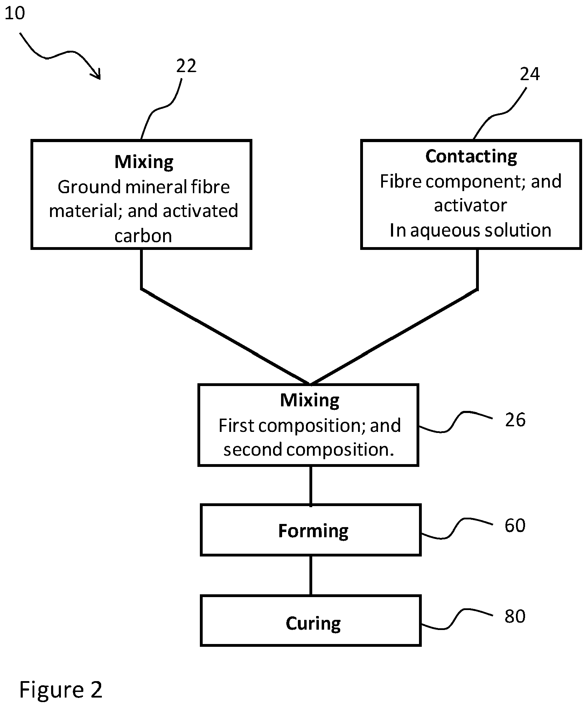

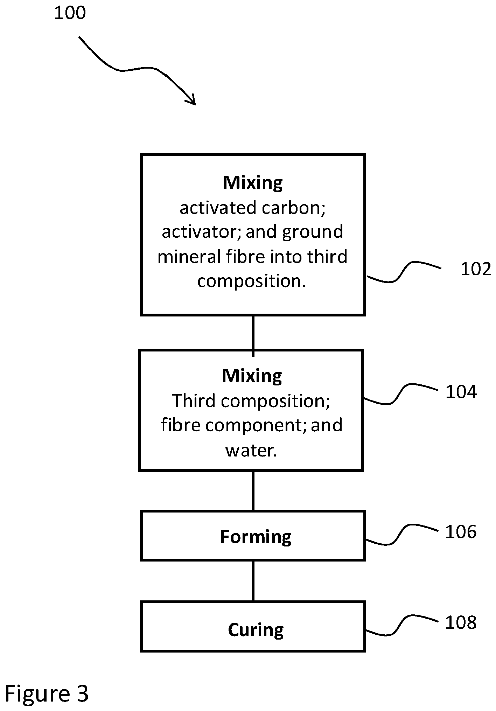

Two methods, both of which are embodiments of the first aspect, will now be described in detail, one with reference to figure 2 and the other with reference to figure 3.

### Semi-dry method

With reference to figure 2 an example of a method 10 for manufacturing of porous geopolymer product will now be described. The illustrated method comprises mixing 22 provided ground mineral fibre material and the activated carbon for obtaining a first composition. For this example, recycled mineral fibre ceiling tiles ground into particulate matter was used as the ground mineral fibre material, although it shall be appreciated that also other type of recycled mineral fibre material may be used. The provided ground mineral fibre material comprises precursors, eg. aluminosilicate, which may be activated by activator and involved in formation of a geopolymer material.

The activated carbon of this example was selected as a powder of activated carbon obtained from plant material. During the mixing 22, the activated carbon is allowed to spread out and cover at least a portion of the surface of the ground fibre material. This may in particular be the case with the activated carbon provided in form of a powder.

A fibre component, which may be selected from for example wood fibre component, such as a wood-wool component, a polymer fibre component, such as a PET fibre component, and a mineral wool component is provided. For the present example wood-wool is provided. Contacting 24 between the fibre component and an activator in aqueous solution takes place for obtaining a second composition. Thereby, water is provided the method via the aqueous solution. It shall be understood that, for example with use of wood-wool as fibre component, but not excluding other type of fibre components, water may in part or fully be provided with the fibre component.

The activator is an important component in the method for allowing reactions involving the ground mineral fibre material, or precursors such as aluminosilicate comprised by the ground mineral fibre material, thereby activating the ground fibre material to be involved in formation of the geopolymer material. The activator may be selected from the group consisting of NaOH, Ca(OH)₂, KOH, Na_{2y}Si_{y}O_{2y+x}, K_{2y}Si_{y}O_{2y+x}, and combinations thereof, wherein y and x each is an integer. For example, y may be 1 and x may be 1. The activator may be selected from one or more of silicate, NaOH, and KOH, and combinations thereof. For example, a mixture of KOH and NaOH may be used, or Na_{2y}Si_{y}O_{2y+x} or K_{2y}Si_{y}O_{2y+x} may be used.

The method further comprises mixing the first and the second compositions 26 for obtaining the mixture. The mixture, thus, comprises the ground mineral fibre material, the activated carbon, the activator, the fibre component, and water. At this stage, the activator can act to activate the ground mineral fibre material. The mixing the first and the second compositions 26 is followed by forming 60 of the mixture into desired shape, such as, for example a shape of a ceiling tile, and curing 80 the mixture, a geopolymer product is obtained. During the curing 80, reactions take place involving contacted compounds from the mixture, including the activated ground mineral fibre material under formation of geopolymer.

Optionally, a filler selected from one or more of kaolin and fly ash may be added or included into the mixture of the method 10.

The method described with reference to figure 2 may be referred to as a semi-dry method, since the method 10 involves mixing a dry first composition and a water containing or aqueous second composition.

### Dry method

It was shown with reference to figure 2 that activated carbon may be mixed with ground mineral fibre material for obtaining a first composition, and that fibre component and activator may be mixed in aqueous solution for obtaining a second composition. Another embodiment of the first aspect for manufacturing of porous geopolymer product, which involves mixing the activated carbon, the activator, and the ground mineral fibre material prior to mixing with the fibre component and water will now be exemplified and described with reference to method 100 illustrated in figure 3. For the method 100 several components may be selected and described similar or analogously as with the method 10 discussed with reference to figure 2 why a reference to discussions concerning figure 2 is made, where relevant, for example concerning the ground mineral fibre composition, the activator, and the activated carbon.

The method 100 illustrated in figure 3 comprises mixing 102 the activated carbon, the activator, and the provided ground mineral fibre material for obtaining a third composition. The ground mineral fibre material may be obtained from recycled mineral fibre objects as was described with reference to the method 10 illustrated with figure 2, and may be activated by activator and involved in formation of a geopolymer material. Also for this example, recycled mineral fibre ceiling tiles were ground into particulate matter.

The activated carbon of this example is selected as a powder of activated carbon obtained from plant material. During the mixing 102, the activated carbon and the activator is allowed to spread out and cover at least a portion of the surface of the ground fibre material.

The method 100 further comprises mixing 104 the third composition with the fibre component and water for obtaining the mixture. The mixture, thus, comprises the ground mineral fibre material, the activated carbon, the activator, the fibre component, and water. At this stage, the activator can act to activate the ground mineral fibre material. Water may be added as free water, but water may alternatively or additionally be added with the fibre component, for example mixed with the fibre component and/or absorbed by the fibre components.

The mixing 104 the third composition with the fibre component and water is followed by forming 106 of the mixture into desired shape, such as, for example a shape of a ceiling tile, and curing 108 the mixture, a geopolymer product is obtained. During the curing 108, reactions take place involving contacted compounds from the mixture, including the activated ground mineral fibre material under formation of geopolymer.

For the above discussed dry method 100 and semi-dry method 10 similar components were used for preparation of the mixture. It shall be understood that the components of the examples are only intended as examples and they could be interchanged or combined with other materials as discussed herein. Mixing was performed for both methods. The mixing may, for example, take place in a tank equipped with a mixer.

Although recycled mineral fibre ceiling tiles ground into particulate matter were used as the ground mineral fibre material for both examples, it shall be appreciated that also other type of recycled mineral fibre material may be used, as long as the ground mineral fibre material is from recycled source and may form geopolymer material. For both methods, the provided ground mineral fibre material comprises precursors, eg. aluminosilicate, which may be activated by the activator and involved in formation of a geopolymer material.

For both methods, the activator may be selected from the group consisting of NaOH, Ca(OH)₂, KOH, Na_{2y}Si_{y}O_{2y+x}, K_{2y}Si_{y}O_{2y+x}, and combinations thereof. For example, a mixture of KOH and NaOH may be used, or Na_{2y}Si_{y}O_{2y+x} or K_{2y}Si_{y}O_{2y+x} may be used.

For both methods the fibre component was selected to be of wood fibre type, eg. of wool type, however several different type of fibre components may be used, such as a polymer fibre component, such as a PET fibre component, or a mineral wool component. The fibre component adds porosity to the geopolymer product, for example as a result of the fibre component having a fluffy and porous three dimensional structure, in combination with suitable levels of other components in the mixture. In the mixing, the fibre component is to an extent covered or coated with other components of the mixture, including the activated ground mineral fibre material and activated carbon and thereby integrated in the structure of the geopolymer product. The porosity of the geopolymer product results in sound dampening properties, but also allows air movements within the geopolymer product which allows undesired contaminants to be contacted with and adsorbed by the activated carbon. It was unexpected that a content of activated carbon in the mixture did not result in reduced mechanical properties and that the components of the mixture did not result in dysfunction of adsorption properties of the activated carbon.

Forming the mixture in a desirable shape was conducted in both example methods. The forming may be realised in different ways, for example buy molding using a form, or by exdruding the mixture. It is also possible to cure the mixture in pre-shape, after which desirable shapes may be realised by mechanical methods, for example machining, cutting or sawing of the pre-shape. During the curing, the geopolymer is formed. The curing may occur without further additives. Curing may in a simple form involve a waiting period for reactions to take place under formation of the geopolymer, Temperature of the mixture during curing may have an effect on the rate of curing. Concentrations of ingedients and components present in the mixture may also have an effect on rate of curing.

Optionally, for both methods, a filler selected from one or more of kaolin and fly ash may be added or included into the mixture of the methods 10, 100.

Experiments have been conducted for both the semi-dry and the dry methods wherein the mixture comprises 0.1-10% of activated carbon, 10-50% of activator, 10-50% of fibre component, and 10-60% of water, by weight of the mixture. The resulting geopolymer products were in form of ceiling tiles which proved to be associated with desirable sound eliminating properties, and at the same time resulted in reductions of volatile contaminants.

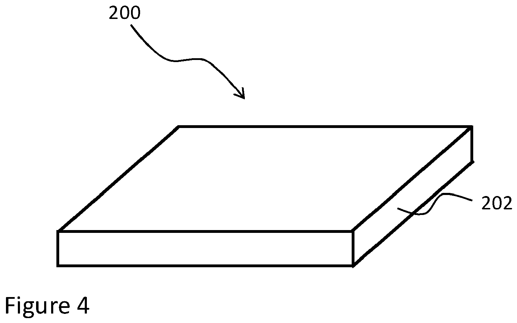

Figure 4 illustrates a geopolymer product 200, which may be used for acoustic treatment of a room. The geopolymer product 200 comprises a layer 202 comprising a fibre component, a geopolymer binder made from ground mineral fibre material obtained from recycled mineral fibre objects, and activated carbon. The layer has a porosity of 0.75 to 0.99.

The geopolymer product 200 may be an acoustical geopolymer panel element. Such a panel element may comprise two opposing major surfaces and four side surfaces extending between the two opposing major surfaces, as is illustrated in figure 4.

The acoustical geopolymer panel element may be used as a horizontally arranged ceiling tile, a vertically arranged baffle element, a wall mounted element or a free standing screen.

It will be appreciated that the present invention is not limited to the embodiments shown. Several modifications and variations are thus conceivable within the scope of the invention which thus is exclusively defined by the appended claims.

## Claims

1. Method (1) for manufacturing of porous geopolymer product, the method comprising
providing ground mineral fibre material (2) obtained from recycled mineral fibre objects,
providing a mixture (4) comprising the ground mineral fibre material, activated carbon, activator, fibre component, and water,
forming the mixture (6) into a desired shape, and
curing the mixture (8), thereby obtaining the geopolymer product.

2. The method (1) according to claim 1, wherein the mixture comprises 10-60% by weight of ground mineral fibre material.
To description: Preferably between 25 and 40%

3. The method according to claim 1 or 2, wherein the mixture comprises 0.1- 10% by weight of activated carbon.

4. The method according to any one of claims 1-3, wherein the mixture comprises 1-50% by weight of activator.

5. The method according to any one of claims 1-4, wherein the mixture comprises 5-75% by weight of fibre component in dry form.

6. The method according to any one of claims 1-5,wherein the mixture comprises 10-60% by weight of water.

7. The method according to any one of claims 1-6, wherein the mixture comprises 0.1-10% of activated carbon, 10-50% of activator, 10-50% of fibre component, and 10-60% of water, by weight of the mixture.

8. The method according to any one of claims 1-7, wherein the activated carbon is in form of a powder.

9. The method according to any one of claims 1-8, wherein the activator is selected from the group consisting of NaOH, Ca(OH)₂, KOH, Na_{2y}Si_{y}O_{2y+x}, K_{2y}Si_{y}O_{2y+x}, and mixtures of any of these compounds, wherein y and x each is an integer.

10. The method according to any one of claims 1-9, wherein the fibre component is in a fibre wool form.

11. The method (1, 10) according to any one of claims 1-10, wherein the providing the mixture (4) comprises
mixing the activated carbon and the ground mineral fibre material (22) for obtaining a first composition;
contacting the fibre component and the activator in aqueous solution (24) for obtaining a second composition,
mixing the first and the second compositions (26) for obtaining the mixture.

12. The method according to any one of claims 1-10, wherein the providing the mixture comprises
mixing the activated carbon, the activator and the ground mineral fibre material for obtaining a third composition;
mixing the third composition with the fibre component and water, for obtaining the mixture.

13. The method according to claim 12, wherein the mixing comprises mixing the activated carbon, the activator, the ground mineral fibre material, and one or both of metakaolin and fly ash, for obtaining the third composition.

14. A geopolymer product comprising
a layer comprising a fibre component, a geopolymer binder made from ground mineral fibre material obtained from recycled mineral fibre objects, and activated carbon,
wherein the layer has a porosity of 0.75 to 0.99.

15. The geopolymer product according to claim 14, wherein the layer comprises 60% to 90% of the geoplymer binder and 10% to 40% of the fibre component, by weight of the layer.

16. Use of the geopolymer product according to claim 14 or 15 for acoustic treatment of a room.

17. A geopolymer product obtained by the method according to any one of claims 1-13.
